Europäisches Patentamt

European Patent Office

Office européen des brevets

(19)

(11) **EP 0 739 138 A2**

(12) **EUROPEAN PATENT APPLICATION**

(43) Date of publication:
    **23.10.1996 Bulletin 1996/43**

(51) Int Cl.6: **H04N 7/26**

(21) Application number: **96302499.7**

(22) Date of filing: **10.04.1996**

(84) Designated Contracting States:
    **DE FR GB NL**

(30) Priority: **19.04.1995 US 424945**

(71) Applicant: **AT&T IPM Corp.
    Coral Gables, Florida 33134 (US)**

(72) Inventors:
    • **Kalmanek, Charles Robert, Jr.
      Short Hills, New Jersey 07078 (US)**

• **Safranek, Robert James
  New Providence, New Jersey 07974 (US)**

(74) Representative:
    **Watts, Christopher Malcolm Kelway, Dr.
    Lucent Technologies (UK) Ltd,
    5 Mornington Road
    Woodford Green Essex, IG8 0TU (GB)**

(54)    **Method and apparatus for matching compressed video signals to a communications channel**

(57)    A method and apparatus for matching compressed video signals to a communications channel. The compressed bitstream is partially decompressed and the bitstream is regenerated with a reduced bit rate to match the channel capacity. Specifically, control information is decoded and entropy decoding is performed on the entropy coded, quantized frequency domain data. Then, the quantized frequency domain data is re-quantized and re-entropy coded so that the resulting compressed bitstream does not exceed the channel capacity bit rate. However, this entire rate conversion process is performed without converting the frequency domain data out of the frequency domain (and back again) as is done by prior art techniques. That is, the frequency domain data is not inverse transformed (out of the frequency domain) in the process of re-quantization. In this manner, a compressed and stored video signal can be matched to the constraints of a given communications channel with substantially less computational cost than is required by the techniques of the prior art.

FIG. 4

EP 0 739 138 A2

## Description

## Field of the Invention

The present invention relates generally to the field of video signal coding and more particularly to the problem of matching the level of compression of coded video signals to the requirements of a given communications channel.

## Background of the Invention

Over the past several years, video signal coding technology has progressed to the point where substantial compression factors can be obtained with little or no loss of video signal quality. In addition, with the advent of high capacity affordable digital storage media, it has become practical to store large quantities of digital video data (representing video programs such as movies, for example) in such a compressed form. These compressed and stored video programs may then subsequently be transmitted over a communications channel to a requesting customer location and decoded *(i.e., uncompressed) thereat.* Among other applications, this technology may be used to enable a customer to receive a selected video program at a customer-requested time. Such applications, commonly known as Video-on-Demand services, are expected to become quite commonplace in the near future. In fact, the market for such services is expected by some observers to approach levels comparable to that of today's huge video rental market.

Meanwhile, of course, the available bandwidth of the various communications channels that might be used for such services is not unlimited. Moreover, the characteristics of the channel *(e.g.,* the available bandwidth) are not likely to be known when the original video program is compressed *(i.e.,* encoded), or they may change between the time the video program is encoded and the time it is desired that the program be transmitted. Thus, even given the substantial compression factors which may be achieved without sacrificing video quality, it may not always be the case that sufficient channel capacity exists to transmit any given requested video program across the appropriate communications channel at the time of the request.

One approach to solving the problem of bandwidth limitations is to compromise the divergent goals of maximum video quality and minimum use of channel bandwidth by storing a video signal having less than a perceptually perfect quality. That is, a video program may be compressed by a factor which is larger than those which do not impact the quality of the video signal. Even though there may be some reduction in the quality of the resultant video, the quality level may still be sufficient so as not to be noticeable (or at least be acceptable) to most viewers. Unfortunately, this approach makes the higher quality video unavailable even when sufficient channel bandwidth is available, and, moreover, will not allow for the transmission of the video program at all when the available bandwidth is very limited.

Another possible solution is to store multiple copies of each video program. Each copy could be encoded at a different bit rate -- that is, with a different compression factor. (Typically, the compression factor is varied by varying the step size of the data quantizer -- a larger quantization step size results in a correspondingly larger compression factor.) When a request to transmit the video program is received, the version that has a bit rate less than (but closest to) the available channel capacity is selected and transmitted. This solution provides high quality video when the necessary channel capacity is available, and provides low quality video when it is not. However, this approach has the drawback that it requires the storage of multiple copies of every video program. When there are many thousands of video programs *(e.g.,* movies) to be stored, this approach can become quite uneconomic if not totally impractical.

A better solution is to store a single high quality version of the video program, and then to reduce the bit rate as needed at the time of transmission. When the transmission channel has sufficient capacity *(i.e.,* a capacity greater than or equal to the bit rate of the stored video program), the requesting customer would get the high quality video program which has been stored directly transmitted to his or her location for decoding thereat. If, on the other hand, the channel capacity is insufficient *(i.e.,* less than the bit rate of the stored video program), some means of reducing the bit rate to match the available channel capacity could be provided in real time. In such a case, of course, the requesting customer may receive a video of less than perceptually perfect quality. However, in this manner, a single stored copy of the video program could feed communications channels having varying capacities.

One approach to performing such a bit rate reduction on an already coded video signal consists of decoding the stored video program to reconstruct the original video data, and then to re-encode this data to a bit rate which matches the channel capacity. However, for many codecs (coder/decoder systems), the encoder complexity can be several orders of magnitude larger than the complexity of the decoder. Such a complexity asymmetry makes economic sense in many applications where a decoder must be included at each customer location *(e.g.,* in each television set), whereas an encoder must only be provided at the video program source. For example, the well known video coding standards adopted by the Motion Picture Experts Group -- MPEG-I and MPEG-II -- use motion compensated, discrete cosine transform based systems for which the encoders are far more complex than the decoders. Consequently, however, the technique of decoding the stored video and then re-encoding the result with a conventional encoder suffers from a degree of computational complexity which can adversely impact a Video-on-Demand service both economically and in terms of performance.

## Summary of the Invention

In accordance with an illustrative embodiment of the present invention, a method and apparatus for matching compressed video signals to a communications channel is provided. The compressed bitstream is partially decompressed and the bitstream is regenerated with a reduced bit rate to match the channel capacity. Specifically, control information is decoded and entropy decoding is performed on the entropy coded, quantized frequency domain data. Then, the quantized frequency domain data is re-quantized and re-entropy coded so that the resulting compressed bitstream does not exceed the channel capacity bit rate. However, this entire rate conversion process is performed without converting the frequency domain data out of the frequency domain (and back again) as is done by prior art techniques. That is, the frequency domain data is not inverse transformed (out of the frequency domain) in the process of re-quantization. In this manner, a compressed and stored video signal can be matched to the constraints of a given communications channel with substantially less computational cost than is required by the techniques of the prior art.

## Brief Description of the Drawings

Fig. 1 shows an environment in which a compressed video signal may be matched to a communications channel in accordance with an illustrative embodiment of the present invention.

Fig. 2 shows an illustrative video encoder which may be used in the environment of Fig. 1.

Fig. 3 shows an illustrative video decoder which may be used in the environment of Fig. 1.

Fig. 4 shows a rate conversion system for matching a compressed video signal to a communications channel in accordance with a first illustrative embodiment of the present invention.

Fig. 5 shows an illustrative video encoder having motion compensation coding which may be used in the environment of Fig. 1.

Fig. 6 shows an illustrative video decoder having motion compensation decoding which may be used in the environment of Fig. 1.

Fig. 7 shows a rate conversion system for matching a compressed video signal to a communications channel in accordance with a second illustrative embodiment of the present invention.

Fig. 8 shows the effect of inserting video program segments such as commercials into a video program in accordance with an illustrative embodiment of the present invention.

Fig. 9 shows a system for inserting video program segments into a video program in accordance with an illustrative embodiment of the present invention.

## Detailed Description

As is well known in the art, a video signal can be compressed in one of two modes -- constant bit rate and variable bit rate. For constant bit rate compression, the output rate of the encoder over a fixed interval is a constant. This is accomplished by varying the quantizer step size used in the encoder, and providing both the encoder and decoder with channel buffers. These buffers are used to ensure that there is always data available for the channel and data available from the channel, respectively. In addition, the degree of fullness of the encoder's channel buffer can be used as a control input for the encoder. If the buffer is filling up too quickly, the quantization step size may be increased, which results in a lower output rate from the quantizer. If the buffer is emptying too quickly, the quantization step size may be decreased, thereby generating more bits.

There are two channel constraints induced by this type of communications channel. First, the decoder buffer can never be permitted to underflow. This condition occurs when the decoder needs more data and there is nothing left in its input buffer. When this occurs, the decoder must wait until more data is arrives, which results in a freezing of the resultant output video image. The second constraint is that the decoder buffer must not be permitted to overflow. This occurs when data arrives from the channel, and the decoder buffer is full. Since there is no room left in the buffer, the data is lost. This occurrence typically results in errors appearing in the resultant output video image.

In variable bit rate systems, it is assumed that the transmission rate of the channel must be controlled by the encoder in order to prevent information from being discarded or excessively delayed in the network. In the context of Asynchronous Transfer Mode (ATM) networks, for example, one particular type of channel is known as a leaky bucket channel. (As is known to those skilled in the art, ATM is a particular protocol in the category of packet switched network protocols. Communication across an ATM network may occur in either a fixed bit rate or a variable bit rate mode.) In particular, a leaky bucket channel has a peak rate capacity, a sustainable rate capacity, and a burst time. The burst time specifies how long an encoder may transmit at the peak rate without causing loss or excessive delay, whereas the encoder may transmit at the sustainable rate indefinitely.

The variable bit rate approach limits the average rate at which an encoder can transmit, but allows an encoder to transmit at the peak rate for a limited period of time. If the desired transmission rate is higher than the leaky bucket constraint would allow, the encoder must reduce its output rate in a manner analogous to the constant bit rate case (e.g. by increasing the quantizer step size). A set of conditions that each of these approaches need to meet in order to ensure that a) buffer overflow does not occur, b) buffer underflow does not occur, and c) the channel constraints are met, is known by those skilled in the art and is described, for example, in A. R. Reibman and B. G. Haskell, "Constraints on Variable Bit-Rate Video for ATM Networks," IEEE Transactions on Circuits and Systems for Video Technology, vol. 2, No. 4. pp. 361-372, December 1992.

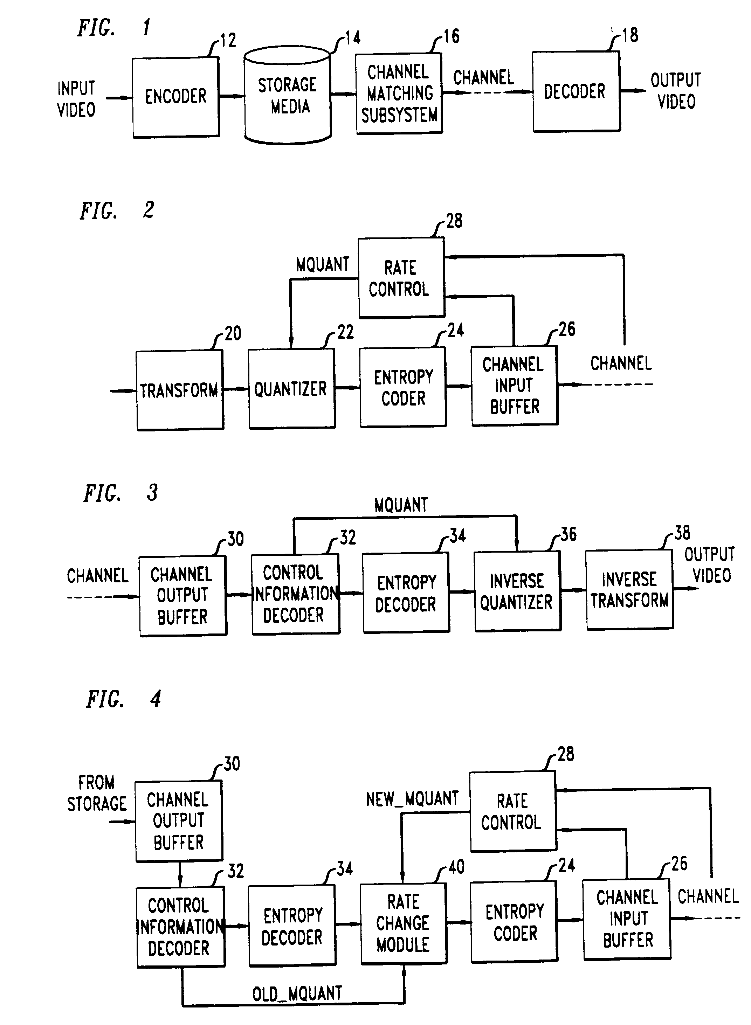

Fig. 1 shows an illustrative environment in which a compressed video signal may be matched to a communications channel. An input video signal is provided to encoder 12 which is coded and stored in a compressed form on storage media 14. The coding may, for example, employ a compression factor which advantageously preserves the perceptual quality of the video signal. Then, in response to a specific customer request to transmit the coded video signal, channel matching subsystem 16 further compresses the video signal retrieved from storage media 14 (if necessary) to match the constraints *(e.g., available bit rate)* of the communications channel. Finally, decoder 18 receives the coded video signal from the channel and decodes it to produce an output video signal.

Encoder 12 of Fig. 1 may be implemented, for example, by the encoder shown in Fig. 2. This encoder is illustratively an intraframe encoder which performs intraframe coding only. As is well known to those skilled in the art, in intraframe coding, a given frame is coded independent of the content of other frames. In "interframe" coding, on the other hand, the data to be coded is compared with the corresponding data from a previous frame, and differences between them are coded.

Specifically, each frame of video is broken up into blocks of pixels (typically of size 8x8) and then transformed into the frequency domain by transform 20. Transform 20 illustratively uses a linear transform such as the well-known Discrete Cosine Transform (DCT). The input block may be represented by $f(x,y)$ where $x$ and $y$ represent spatial indices for the pixels within the block. The output of the linear transform will be denoted herein as $F(u,v)$, which depicts the frequency domain representation of the input data block. Here $u$ and $v$ represent the spatial frequency indices of the block.

The resulting frequency domain coefficients produced by transform 20 are then quantized by quantizer 22, in order to reduce the entropy of the coefficients by a quantization process. This step results in a loss of information, of course, but provides for a reduction of the data rate in the system. As discussed above, the quantization process may illustratively use a quantization step size which is sufficiently small so as not to reduce the perceptual quality of the ultimately reconstructed *(i.e., decoded)* video.

The quantization process performed by quantizer 22 may be defined, for example, as a division of each transform coefficient by a corresponding quantization step size value. This value advantageously may be the product of two terms, MQUANT and QUANT$(u,v)$, in order to provide simultaneously for independent control of the quantization of individual coefficients and for convenient control of the overall quantization level *(i.e., scaling of the overall output bit rate)*. In particular, QUANT$(u,v)$ may be selected based on perceptual criteria in order to maximize the quality of the encoded image given the attendant reduction in bit rate. For example, QUANT$(u,v)$ may be selected so that if MQUANT has a value of unity, a reconstruction of the encoded video signal would be perceptually indistinguishable from the original video signal. Procedures for finding such a quantization matrix are well known to those of ordinary skill in the art. *(See, e.g.,* H. Peterson, A. Ahumada and A. Watson, "An Improved Detection Model for DCT Coefficient Quantization," Proc. of the International Society for Optical Engineering, vol. 1913, pp. 191-201, February 1993.)

The value assigned to MQUANT may advantageously be used to adjust the overall output bit rate. Note, for example, that increasing MQUANT reduces the output bit rate since it increases the quantizer step size, thereby reducing the entropy of the quantizer output. Correspondingly, decreasing MQUANT increases the output bit rate by reducing the quantizer step size, which in turn increases the entropy of the quantized data. In the above-mentioned MPEG compression standards, for example, MQUANT can take on values in the rage of 1 to 31. Thus, the matrix of quantized frequency domain coefficients, denoted herein as $F_Q(u,v)$, may be computed by quantizer 22 as

$$F_Q(u,v) = \text{Integer Round } (F(u,v) \,/\, (\text{MQUANT} * \text{QUANT}(u,v))$$

where the "Integer Round" function computes the closest integer to the value of its operand.

In the encoder of Fig. 2, MQUANT is generated by rate control 28. Specifically, rate control 28 determines MQUANT based on the degree of fullness of channel input buffer 26, as described above. That is, rate control 28 monitors the state of channel input buffer 26 and adjusts MQUANT to ensure the buffer does not overflow or underflow and that the channel constraints are met. Many approaches for performing this operation are known to those skilled in the art. Typically, they operate by taking as input the degree of buffer fullness, the current value of MQUANT, statistics about the input data, and the channel constraints. Based on these inputs, they attempt to determine an optimal value of MQUANT to be used for the quantization of the next data block. This approximated optimal value is commonly defined as the value that produces the highest quality output image while meeting the channel constraints. Examples of such techniques are described, for example, in Reibman and Haskell (see citation above) and in K. Ramchandran, A. Ortega and M. Vetterli, "Bit Allocation for Dependent Quantization with Applications to Multiresolution and MPEG Video Coders, " IEEE Transactions on Image Processing, vol. 3, no. 5, September 1994.

In addition, rate control 28 may determine MQUANT based on information provided directly by the communications channel itself. *(See, e.g.,* H. Kanakia, P. Mishra and A. Reibman, "An Adaptive Congestion Control Scheme for Real-Time Packet Video Transport," Proc. of ACM SIGCOMM, September, 1993.) In the illustrative encoder shown in Fig. 2, for example, both the degree of fullness of channel input buffer 26 and a signal provided directly from the communications channel are available. In other illustrative embodiments, either one or the other of these mechanisms may be used alone.

Entropy coder 24 takes the fixed length quantized transform coefficients and produces a set of variable length channel symbols. This process introduces no further information loss, but minimizes the bit rate by coding more commonly occurring values with fewer bits. Specifically, entropy coder 24 produces a compressed data stream whose rate approaches the entropy of the quantized transform coefficients. Typical entropy coding techniques, familiar to those of ordinary skill in the art, include Huffman and Arithmetic coding.

Finally, the variable length symbols generated by entropy coder 24 are inserted into channel input buffer 26 either for transmission across the communications cnannel, or, as in the environment of Fig. 1, for storage in storage media 14 so as to be available for subsequent use. The various types of coded data that are put into channel input buffer 26 include (a) bitstream synchronization information such as "start" and "marker" codes, (b) control information such as image size, frame rate, coding modes and quantizer scales *(e.g.,* the value of MQUANT), and (c) the variable length coded *(i.e.,* entropy coded) quantized transform coefficients themselves. Note that for a constant rate channel, for example, the same number of bits are removed from the buffer and transmitted over the channel for each video frame *(i.e.,* over the time period represented by each video frame).

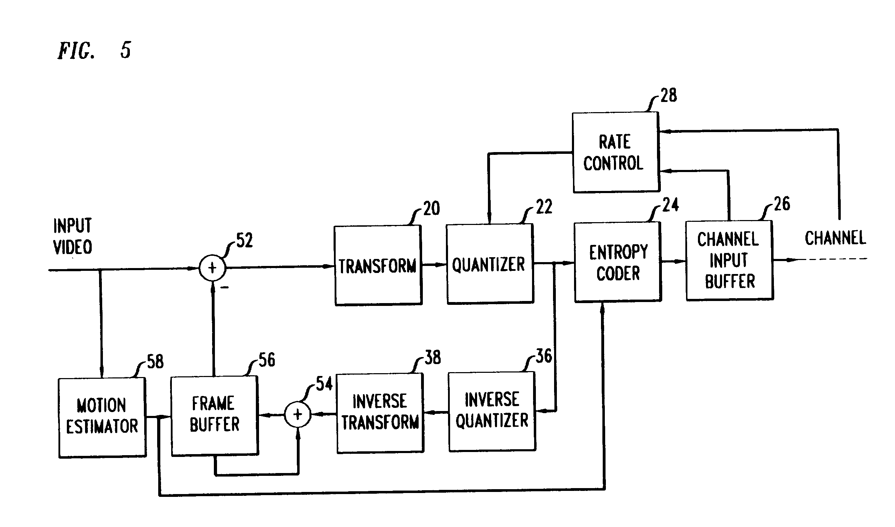

Fig. 3 shows a decoder which corresponds to the encoder of Fig. 2 and may illustratively be used to implement decoder 18 of Fig. 1. In operation, data which is received from the communications channel is placed into channel output buffer 30. For a constant rate channel, for example, the same number of bits arrive and are placed into channel output buffer 30 for each video frame *(i.e.,* over the time period represented by each video frame). This data is removed from channel output buffer 30 as it is required by the decoder, and the synchronization information and the control information are extracted therefrom by control information decoder 32. Note that the value of MQUANT in particular is extracted as part of the control information.

The variable length coded quantized transform coefficients are applied to entropy decoder 34 which produces a quantized symbol stream. These quantized symbols are then converted back into a matrix of transform coefficients by inverse quantizer 36. This matrix, referred to herein as $F_Q(u,v)$, is computed by performing a multiplication by MQUANT and QUANT$(u,v)$ as follows:

$$F_Q(u,v) = F_Q(u,v) \, * \, QUANT(u,v) \, * \, MQUANT$$

Finally, the transform coefficients are converted back into the spatial domain by inverse transform 38, which performs the inverse operation to that of transform 20 of the encoder of Fig. 2. The resultant output images (for the individual frames) may then be displayed at the times specified by the synchronization information which was extracted by control information decoder 32. The resultant overall video is preferably as perceptually indistinguishable as possible from the original video signal.

As described above, channel matching subsystem 16 of the environment of Fig. 1 may be implemented by (a) processing the input bitstream with the decoder of Fig. 3 to generate a decoded video signal, and (b) providing the resultant decoded video signal to the encoder of Fig. 2 which re-encodes the data for the new channel conditions. Alternatively, channel matching subsystem 16 may be implemented by the rate conversion system of Fig. 4 in accordance with a first illustrative embodiment of the present invention. In particular, the system of Fig. 4 enables a compressed video signal to be matched to a communications channel with a system of reduced complexity to that of prior art techniques.

The rate conversion system of Fig. 4 operates as follows. First, the input bitstream is read into channel output buffer 30. The control and synchronization information is then extracted by control information decoder 32. Next, the variable length coded transform coefficients are decoded by entropy decoder 34. Then, the re-quantization process is advantageously carried out as a single process by rate change module 40. Moreover, note that this process is performed without converting the transform coefficients back into the spatial domain *(i.e.,* to pixel data), as is done, for example, by inverse transform 38 of the decoder of Fig. 3 (or, for that matter, transforming the resultant spatial domain data back again into the frequency domain, as is done, for example, by transform 20 of the encoder of Fig. 2).

Specifically, the matrix of transform coefficients, $F_Q(u,v)$, is computed by rate change module 40 as follows:

$$F_Q(u,v) = FQ(u,v) * (OLD\_MQUANT/NEW\_MQUANT)$$

where OLD_MQUANT is the value of MQUANT previously used to encode the stored bitstream *(i.e.,* the MQUANT value extracted by control information decoder 32), and NEW_MQUANT is determined by rate control 28 to ensure that the new channel constraints are met. As in the case of the encoder of Fig. 2, rate control 28 generates the desired quantization level (in this case, NEW_MQUANT) based on the degree of fullness of channel input buffer 26 and/or a signal received from the communications channel.

Finally, entropy coder 24 takes the fixed length quantized transform coefficients generated by rate change module 40 and produces a new set of variable length channel symbols. These symbols are inserted into channel input buffer 26 (along with the synchronization information and the control information) for transmission across the communications channel. In this manner, the compressed video signal has been re-encoded with a different quantization level so as to meet the constraints of the given communications channel. Moreover, this has been achieved with a system having reduced complexity over that of prior art techniques.

The above-described system for matching a compressed video signal to a communications channel in accordance with an illustrative embodiment of the present invention can be extended to the case where the compressed video signal has been coded with the use of motion compensation. As is well known to those skilled in the art, motion compensation is a technique used in interframe video coding to further reduce the bit rate required to transmit a coded signal. Interframe coding techniques typically operate by generating a prediction for blocks of the current frame from blocks of the previously encoded frame. Then, only the difference between the frame being coded and the generated prediction needs to be coded and transmitted. Since the previously encoded frame (as opposed to the actual previous frame) is advantageously used for this prediction, errors do not propagate over time.

With motion compensation, the prediction is generated by determining the location of the block from the previously encoded frame which provides the best estimate of the block to be coded. Specifically, the location of this chosen block from the previously encoded frame is encoded though the use of motion vectors. A motion vector specifies the relative location of the prediction block with respect to the current block to be coded. Thus, the encoding of the current block comprises only a motion vector and difference (between the block being coded and the prediction block from the previously encoded frame) information.

Fig. 5 shows an illustrative video encoder having motion compensated interframe coding which may be used in the environment of Fig. 1. The block of the frame which is to be coded is subtracted from the prediction block by subtractor 52 to generate the difference. This difference signal is now transformed into the frequency domain and quantized by transform 20 and quantizer 22, respectively, using the techniques described above in the discussion of the illustrative encoder of Fig. 2. Finally, both the quantized information and the motion vectors used to generate the prediction are entropy coded by entropy coder 24 and inserted into channel input buffer 26 (along with the synchronization information and the control information) for transmission across the communications channel or for storage, as described above.

In order to generate the prediction block, the illustrative encoder of Fig. 5 includes a subsystem which mimics the behavior of a corresponding decoder in the following manner. First, the quantized transform coefficients are inverse quantized and inverse transformed by inverse quantizer 36 and inverse transform 38, respectively, in order to generate a reconstructed version of the quantized difference signal. This signal is then added by adder 54 to the prediction block from the previous frame and stored in frame buffer 56. Frame buffer 56 then uses the motion vectors for the given block (as determined by motion estimator 58) to retrieve the appropriate data to use as the prediction block *(i.e.,* to supply to subtractor 52). Specifically, motion estimator 58 evaluates a plurality of possibly motion vectors, and selects one of these based on quality of the corresponding prediction.

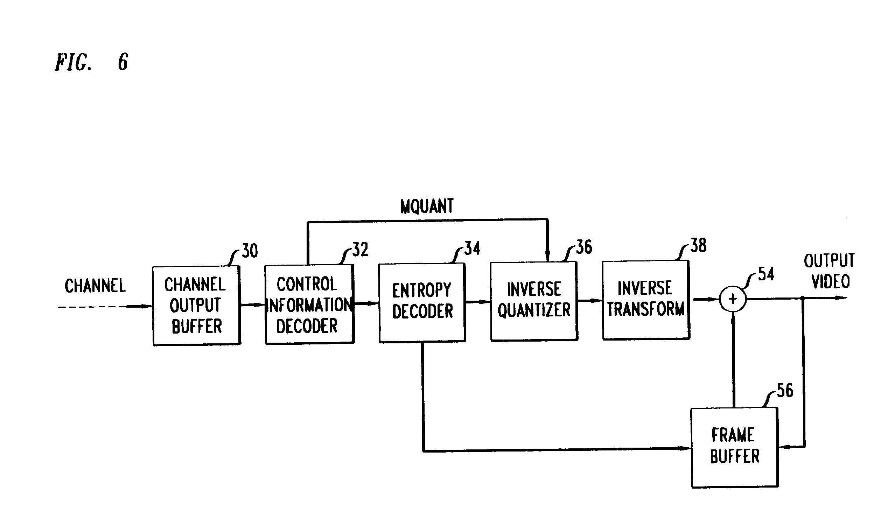

Fig. 6 shows an illustrative video decoder having motion compensated interframe coding which corresponds to the illustrative encoder of Fig. 5. As in the illustrative decoder of Fig. 3, data which is received from the communications channel is placed into channel output buffer 30. This data is removed from channel output buffer 30 as it is required by the decoder, and the synchronization and control information are extracted therefrom by control information decoder 32. Note again that the value of MQUANT in particular is extracted as part of the control information.

The variable length coded quantized transform coefficients and motion vectors are applied to entropy decoder 34 which produces a quantized symbol stream and the motion vectors. The quantized symbols are converted back into a matrix of (un-quantized) transform coefficients by inverse quantizer 36. Then, the transform coefficients are converted back into the spatial domain by inverse transform 38. Note, however, that in the illustrative decoder of Fig. 6 (unlike the decoder of Fig. 3), this spatial domain data represents <u>difference</u> information as opposed to actual pixel data.

The motion vectors are applied to frame buffer 56 (which contains the previously decoded frame) for use in generating a prediction block. The prediction block is then added to the difference data by adder 54 to produce the pixel data of the given block of the current frame for use in the output video signal. Note that the output video signal data is also stored back in frame buffer 56 for use in generating the prediction blocks for the next frame.

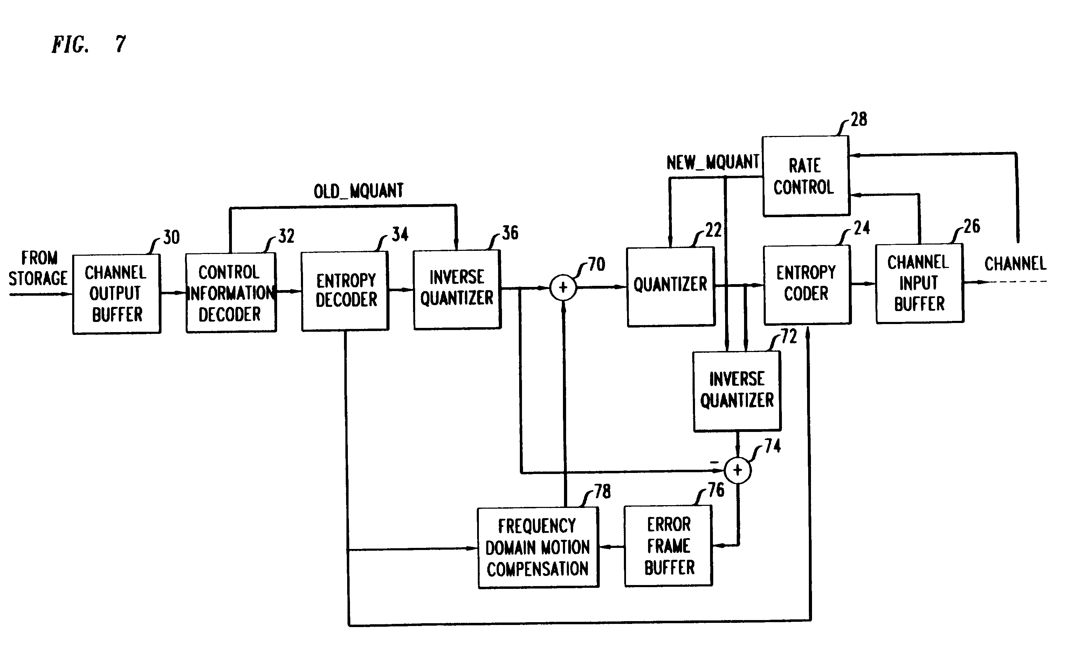

In an analogous manner to that described above in connection with the illustrative embodiment of Fig. 4, channel matching subsystem 16 of the environment of Fig. 1 may be implemented by (a) processing the input bitstream with the decoder of Fig. 6 to generate a decoded video signal, and (b) providing the resultant decoded video signal to the encoder of Fig. 5, which re-encodes the data for the new channel conditions. Alternatively, however, channel matching subsystem 16 may be implemented by the illustrative rate conversion system of Fig. 7 in accordance with a second illustrative embodiment of the present invention. In particular, the system of Fig. 7 enables a compressed video signal having been coded with motion compensated interframe coding to be matched to a communications channel with a system of reduced complexity to that of prior art techniques.

One difference between performing rate conversion in the case where the compressed video signal employs motion compensated interframe coding and in the case employing intraframe coding only as described above results because the quantized difference signal for the current frame depends on the previously encoded frame. The previously encoded frame, in turn, depends on the encoded frame previous to it and the quantized difference signal from the previous frame. Thus, if the quantized difference signal changes, as it does during the re-quantization process, there is the potential for errors to accumulate over time. In order to avoid such problems, the additional error introduced by the re-quantization process for a given frame must be computed, saved, and added back in to the quantized difference signal for the next frame.

Thus, the illustrative rate conversion system of Fig. 7 operates as follows. As in the case of the illustrative system of Fig. 4, the input bitstream is first read into channel output buffer 30. The synchronization information and the control information are then extracted by control information decoder 32. Next, the variable length coded transform coefficients and motion vectors are decoded by entropy decoder 34 to produce quantized symbols and motion vectors, respectively. Then, inverse quantizer 36 converts the quantized symbols back into a matrix of transform coefficients (representing differences). Specifically, the inverse quantization comprises multiplication by OLD_MQUANT to produce the reconstructed frequency domain difference signal. Before this difference signal is re-quantized to the desired quantization level, however, the propagated error which is due to the re-quantization process performed on the previous frame is advantageously added to this difference signal by adder 70, in order to avoid the accumulation of the re-quantization error as described above. The result of this addition, therefore, is an <u>error-corrected</u> frequency domain difference signal.

The error-corrected frequency domain difference signal may now be re-quantized by quantizer 22 based on the value of NEW_MQUANT, which has been determined by rate control 28. Specifically, the re-quantization performed by quantizer 22 comprises division by NEW_MQUANT. Finally, the rate converted *(i.e.,* re-quantized) information, along with the motion vectors which were entropy decoded by entropy decoder 34, are (re-)entropy coded by entropy coder 24 and inserted into channel input buffer 26 (along with the synchronization and control information) for transmission across the communications channel. As in the illustrative system of Fig. 4, the degree of fullness of channel input buffer 26, and/or a signal provided directly from the communications channel, may be used as inputs to rate control module 28 to determine the appropriate value for NEW_MQUANT.

To determine the propagated error which is due to the re-quantization process performed on the previous frame, the rate converted *(i.e.,* re-quantized) result from quantizer 22 is first inverse quantized by *(i.e.,* multiplied by) NEW_MQUANT. This operation is performed by inverse quantizer 72. In this manner, a reconstructed *(i.e.,* inverse quantized) <u>rate converted</u> difference signal is produced. Then, the output of inverse quantizer 36, which comprises a reconstructed <u>non-rate converted</u> difference signal, is subtracted from the output of inverse quantizer 72 to determine the amount of error which resulted from the re-quantization *(i.e.,* rate conversion) process.

This determined error, which, advantageously, is still represented in the frequency domain, is now stored in error frame buffer 76. In order to generate the propagated error due to rate conversion, however, the frequency domain information in frame buffer 76 must be motion compensated -- that is, it must be translated by the applicable motion vector values. A conventional approach to achieving such a result would be to apply an inverse transform before frame buffer 76, perform conventional motion compensation in the spatial domain, and then apply a (forward) transform after the motion compensation. However, it is known to those skilled in the art that various operations on video images, including motion compensation, advantageously may be performed <u>directly</u> on data in the transform *(i.e.,* frequency) domain. *See, e.g.,* B. C. Smith and L. Rowe, "Algorithms for Manipulating Compressed Images," IEEE Computer Graphics and Applications, pp. 34-42, September 1993, and S-F. Chang and D. E. Messerschmidt, "Manipulation and Compositing of MC-DCT Compressed Video," IEEE Journal on Selected Areas in Communications, vol. 13, No. 1. pp. 1-11, January 1995. In light of this knowledge, and based on the motion vectors provided by entropy decoder 34, frequency domain motion compensation 78 advantageously performs such an operation directly on the data stored in error frame buffer 76. The result is the propagated error signal due to rate conversion.

As in the case of the first illustrative embodiment *(i.e.,* the system of Fig. 4), note that the entire rate conversion process of the system of Fig. 7 is performed without converting the transform coefficients back into the spatial domain (as is done, for example, by inverse transform 38 of the decoder of Fig. 6) or transforming spatial domain data (such as the difference data) into the frequency domain (as is done, for example, by transform 20 of the encoder of Fig. 5). In this manner, the compressed video signal is re-encoded with a different quantization level meeting the constraints of the given communications channel, with use of a technique having reduced complexity over that of the prior art techniques.

In accordance with one illustrative embodiment of the present invention, video program segments may be inserted into another video program. The video program segments may, for example, be downstream commercials. Such an application may be useful when a compressed program is distributed from one location to a plurality of other locations via potentially multiple distribution channels. At some point in the distribution path of one or more of these channels, it may be desired to replace a portion of the distributed program with a different video program segment. For example, local television stations and cable companies often insert local commercials into network program feeds. The effect of such a process is illustratively shown in Fig. 8. As can be seen in this figure, a portion of original program 82 -- namely, that portion between time $T_{START}$ and time $T_{END}$ -- is to be replaced by the data contained in inserted program segment 84.

If an insertion process such as that depicted in Fig. 8 is to be followed by a transmission of the resultant video across a communications channel, channel and buffer constraints such as those described above will need to be met. In order to ensure such conditions, the bit rate used for the inserted program segment should advantageously be adjusted based on the boundary conditions set by the original program.

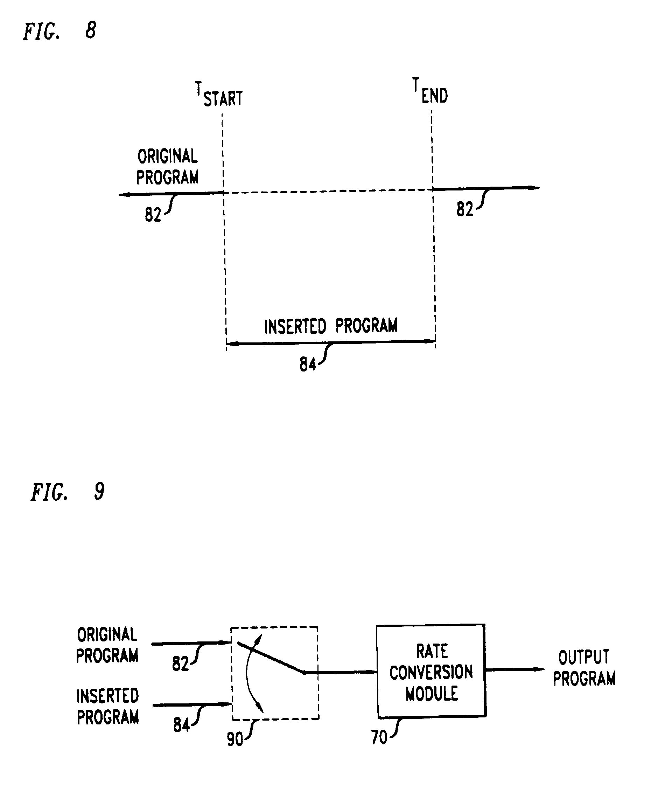

Fig. 9 shows a system for inserting video program segments such as commercials into a video program in accordance with an illustrative embodiment of the present invention. Rate conversion module 70 may, for example, be the illustrative system of Fig. 7. For the time previous to $T_{START}$, input selector 90 is in a first position, thereby providing original program 82 as the output program after appropriate rate conversion is performed by rate conversion module 70. Between time $T_{START}$ and time $T_{END}$, input selector 90 is in a second position, thereby providing inserted program segment 84 as the output program after appropriate rate conversion is performed by rate conversion module 70. At time $T_{END}$, input selector is returned to the first position, thereby again providing original program 82 as the output program after appropriate rate conversion is performed by rate conversion module 70. In this manner, a compressed video program segment such as a commercial may be inserted into another compressed video program, and the bit rates of both programs may be matched to a communications channel with use of a system having reduced complexity over that of prior art techniques.

For clarity of explanation, the illustrative embodiment of the present invention has been presented as comprising individual functional blocks. The functions these blocks represent may be provided through the use of either shared or dedicated hardware, including, but not limited to, hardware capable of executing software. The functions of the processing blocks presented in the instant figures may, for example, be provided by a single shared processor. (Use of the term "processor" should not be construed to refer exclusively to hardware capable of executing software.) Illustrative embodiments may comprise digital signal processor (DSP) hardware, such as the AT&T DSP16 or DSP32C, read-only memory (ROM) for storing software performing the operations discussed herein, and random access memory (RAM) for storing DSP results. Very large scale integration (VLSI) hardware embodiments, as well as custom VLSI circuitry in combination with a general purpose DSP circuit, may also be provided.

Although a number of specific embodiments of this invention have been shown and described herein, it is to be understood that these embodiments are merely illustrative of the many possible specific arrangements which can be devised in application of the principles of the invention. Numerous and varied other arrangements can be devised in accordance with these principles by those of ordinary skill in the art without departing from the scope of the invention. For example, although the illustrative embodiments described above have in each case involved compressed video signals, the principles of the instant invention may be applied as well to compressed speech, audio, or image signals, or, for that matter, any other signal comprising data which has been compressed with use of a quantization process. In addition, although the illustrative embodiments shown above have been described in the context of an ATM network, the principles of the instant invention may be applied as well to any communications channel having a potentially limited available bandwidth.

## Claims

1. A method of re-coding a first encoded signal to generate a second encoded signal which meets a bit rate constraint of a communications channel, the first encoded signal and the second encoded signal each representing a common original signal, the first encoded signal comprising quantized frequency domain data, the quantized frequency domain data having been quantized to a first quantization level, the method comprising the steps of:

re-quantizing the quantized frequency domain data to a second quantization level different than the first quantization level without transforming the quantized frequency domain data out of the frequency domain, the second quantization level based on the bit rate constraint of the communications channel; and

generating the second encoded signal based on the re-quantized frequency domain data.

2.  The method of claim 1 wherein the quantized frequency domain data has been entropy coded, the method further comprising the steps of:

entropy decoding the quantized frequency domain data prior to the re-quantizing step; and

entropy coding the re-quantized frequency domain data.

3.  The method of claim 1 wherein the quantized frequency domain data has been generated by transforming non-frequency domain data into the frequency domain with use of a frequency domain transform.

4.  The method of claim 3 wherein the common original signal represents video information and the non-frequency domain data comprises pixel data.

5.  The method of claim 4 wherein the frequency domain transform comprises a discrete cosine transform.

6.  The method of claim 3 wherein the common original signal represents video information and the non-frequency domain data comprises motion-compensated interframe difference data.

7.  The method of claim 6 wherein the frequency domain transform comprises a discrete cosine transform.

8.  The method of claim 3 wherein the common original signal represents audio information and the non-frequency domain data comprises signal amplitude data.

9.  The method of claim 1 comprising the further step of determining the bit rate constraint of the communications channel based on a measure of fullness of a channel input buffer coupled to the communications channel.

10. The method of claim 1 comprising the further step of determining the bit rate constraint of the communications channel based on a signal received from the communications channel.

11. The method of claim 1 wherein the communications channel comprises a channel of a packet switched network.

12. The method of claim 11 wherein the packet switched network comprises a network having an Asynchronous Transfer Mode protocol.

13. The method of claim 1 wherein the first encoded signal further comprises encoded control information, the method further comprising the step of decoding the encoded control information, and wherein the step of generating the second encoded signal comprises generating the second encoded signal further based on the decoded control information.

14. The method of claim 1 comprising the further step of replacing a portion of a third encoded signal which meets the bit rate constraint of the communications channel with the second encoded signal.

15. The method of claim 14 wherein the common original signal and the third encoded signal each represent video information and wherein the video information represented by the common original signal comprises a television commercial.

16. A method for communicating an original signal across a communications channel having a bit rate constraint associated therewith, the method comprising the steps of:

encoding the original signal to generate a first encoded signal comprising encoded control information and quantized frequency domain data, the quantized frequency domain data quantized to a first quantization level;

decoding the encoded control information;

re-quantizing the quantized frequency domain data to a second quantization level different than the first quantization level without transforming the quantized frequency domain data out of the frequency domain, the second quantization level based on the bit rate constraint associated with the communications channel;

generating a second encoded signal based on the encoded control information and the re-quantized frequency domain data; and

transmitting the second encoded signal across the communications channel to a destination.

17. The method of claim 16 further comprising the step of storing the first encoded signal in a storage device, and wherein the step of re-quantizing the quantized frequency domain data comprises retrieving the quantized frequency domain data from the storage device.

18. The method of claim 16 further comprising the steps of:

receiving the second encoded signal at the destination; and

decoding the second encoded signal at the destination to produce an output signal representing the original signal.

19. The method of claim 18 further comprising the step of storing the first encoded signal in a storage device and wherein the step of re-quantizing the quantized frequency domain data comprises retrieving the quantized frequency domain data from the storage device.

20. An apparatus for re-coding a first encoded signal to generate a second encoded signal which meets a bit rate constraint of a communications channel, the first encoded signal and the second encoded signal each representing a common original signal, the first encoded signal comprising quantized frequency domain data, the quantized frequency domain data having been quantized to a first quantization level, the apparatus comprising:

a quantizer adapted to re-quantize the quantized frequency domain data to a second quantization level different than the first quantization level without transforming the quantized frequency domain data out of the frequency domain, the second quantization level based on the bit rate constraint of the communications channel; and

a signal generator of the second encoded signal based on the re-quantized frequency domain data.

21. The apparatus of claim 20 wherein the quantized frequency domain data has been entropy coded, the apparatus further comprising:

an entropy decoder adapted to be applied to the quantized frequency domain data; and

an entropy coder adapted to be applied to the re-quantized frequency domain data.

22. The apparatus of claim 20 wherein the quantized frequency domain data has been generated by transforming non-frequency domain data into the frequency domain with use of a frequency domain transform.

23. The apparatus of claim 22 wherein the common original signal represents video information and the non-frequency domain data comprises pixel data.

24. The apparatus of claim 23 wherein the frequency domain transform comprises a discrete cosine transform.

25. The apparatus of claim 22 wherein the common original signal represents video information and the non-frequency domain data comprises motion-compensated interframe difference data.

26. The apparatus of claim 25 wherein the frequency domain transform comprises a discrete cosine transform.

27. The apparatus of claim 22 wherein the common original signal represents audio information and the non-frequency domain data comprises signal amplitude data.

**28.** The apparatus of claim 20 further comprising:

a channel input buffer coupled to the communications channel; and

a rate control module adapted to determine the bit rate constraint of the communications channel based on a measure of fullness of the channel input buffer.

**29.** The apparatus of claim 20 further comprising a rate control module adapted to determine the bit rate constraint of the communications channel based on a signal received from the communications channel.

**30.** The apparatus of claim 20 wherein the communications channel comprises a channel of a packet switched network.

**31.** The apparatus of claim 30 wherein the packet switched network comprises a network having an Asynchronous Transfer Mode protocol.

**32.** The apparatus of claim 20 wherein the first encoded signal further comprises encoded control information, the apparatus further comprising a decoder adapted to be applied to the encoded control information, and wherein the signal generator of the second encoded signal is adapted to generate the second encoded signal based on both the re-quantized frequency domain data and the decoded control information.

**33.** The apparatus of claim 20 further comprising a switch adapted to replace a portion of a third encoded signal with the second encoded signal, wherein the third encoded signal also meets the bit rate constraint of the communications channel.

**34.** The apparatus of claim 33 wherein the common original signal and the third encoded signal each represent video information and wherein the video information represented by the common original signal comprises a television commercial.

**35.** A communications system for communicating an original signal across a communications channel having a bit rate constraint associated therewith, the system comprising:

an encoder adapted to be applied to the original signal and adapted to generate a first encoded signal comprising encoded control information and quantized frequency domain data, the quantized frequency domain data quantized to a first quantization level;

a decoder adapted to be applied to the encoded control information;

a quantizer adapted to re-quantize the quantized frequency domain data to a second quantization level different than the first quantization level without transforming the quantized frequency domain data out of the frequency domain, the second quantization level based on the bit rate constraint associated with the communications channel;

a signal generator of a second encoded signal based on both the encoded control information and the re-quantized frequency domain data; and

a transmitter coupled to the communications channel, the transmitter adapted to transmit the second encoded signal across the communications channel to a destination.

**36.** The communications system of claim 35 further comprising a storage device adapted to store the first encoded signal, and wherein the quantizer is further adapted to retrieve the quantized frequency domain data from the storage device.

**37.** The communications system of claim 35 further comprising:

a receiver coupled to the communications channel at the destination, the receiver adapted to receive the second encoded signal; and

a decoder adapted to decode the second encoded signal at the destination and to produce an output signal representing the original signal.

38. The communications system of claim 37 further comprising a storage device adapted to store the first encoded signal, and wherein the quantizer is further adapted to retrieve the quantized frequency domain data from the storage device.

FIG. 1

INPUT VIDEO → ENCODER `12` → STORAGE MEDIA `14` → CHANNEL MATCHING SUBSYSTEM `16` → CHANNEL → DECODER `18` → OUTPUT VIDEO

FIG. 2

MQUANT → RATE CONTROL `28`

→ TRANSFORM `20` → QUANTIZER `22` → ENTROPY CODER `24` → CHANNEL INPUT BUFFER `26` → CHANNEL

FIG. 3

MQUANT

CHANNEL → CHANNEL OUTPUT BUFFER `30` → CONTROL INFORMATION DECODER `32` → ENTROPY DECODER `34` → INVERSE QUANTIZER `36` → INVERSE TRANSFORM `38` → OUTPUT VIDEO

FIG. 4

FROM STORAGE → CHANNEL OUTPUT BUFFER `30`

NEW_MQUANT → RATE CONTROL `28`

CONTROL INFORMATION DECODER `32` → ENTROPY DECODER `34` → RATE CHANGE MODULE `40` → ENTROPY CODER `24` → CHANNEL INPUT BUFFER `26` → CHANNEL

OLD_MQUANT

*FIG. 5*

FIG. 6

**FIG. 7**

*FIG. 8*

$T_{START}$          $T_{END}$

ORIGINAL
PROGRAM

82                                                     82

INSERTED PROGRAM

84

*FIG. 9*

ORIGINAL
PROGRAM
82

INSERTED
PROGRAM
84          90

RATE
CONVERSION
MODULE
70

OUTPUT
PROGRAM